Europäisches Patentamt

(19) European Patent Office

Office européen des brevets

(11) Publication number: **0 078 911**
**B1**

(12) **EUROPEAN PATENT SPECIFICATION**

(45) Date of publication of patent specification: **31.07.85**

(21) Application number: **82108958.8**

(22) Date of filing: **28.09.82**

(51) Int. Cl.⁴: **G 11 B 5/60,** G 11 B 5/54,
H 02 K 41/035, G 11 B 21/02

(54) Magnetic head air bearing slider and electromagnetic actuator assembly.

(30) Priority: **10.11.81 US 320167**
**10.11.81 US 320166**

(43) Date of publication of application:
**18.05.83 Bulletin 83/20**

(45) Publication of the grant of the patent:
**31.07.85 Bulletin 85/31**

(84) Designated Contracting States:
**DE FR GB IT**

(56) References cited:
EP-A-0 011 149
EP-A-0 012 650
WO-A-81/01223
FR-A-2 421 501
US-A-3 893 185
US-A-4 287 445

Electronic Design, Sept, 36, 1981, p. 97-103

(73) Proprietor: **International Business Machines
Corporation
Old Orchard Road
Armonk, N.Y. 10504 (US)**

(72) Inventor: **Watrous, Robert Bringhurst
7208 Golf Course Lane
San Jose California 95139 (US)**

(74) Representative: **Hobbs, Francis John
IBM United Kingdom Patent Operations Hursley
Park
Winchester, Hants, SO21 2JN (GB)**

## Description

This invention relates to assemblies comprising an electromagnetic actuator and a magnetic head air bearing slider for use in accessing magnetic disk files.

In prior art disk files, the head accessing system includes magnetic transducers, air bearing head sliders to which the transducers are attached, head suspensions on which the sliders are mounted, head arms to which the suspensions are joined, and an actuator, such as a voice coil motor, coupled to the entire assembly. It is apparent that a system of this type has many components, requires many manufacturing steps and processes, and is costly to manufacture and maintain. Also, the magnitude of the moving mass used for accessing to data tracks on a disk surface limits the accessing speed. Other problems, such as misalignment, skewing, dynamic resonances, inter alia, are experienced with such accessing systems.

This invention seeks to provide a magnetic head slider and actuator assembly which is cheaper to manufacture and performs better than conventional assemblies employed in disk files.

EP—A—12 650 discloses an optical transducer head and electromagnetic actuator assembly in which the head is attached to a coil of the actuator so that the coil and the head are disposed alongside one another. The actuator comprises a frame supporting permanent magnets and defining a pathway for movement of the coil upon interaction of current through the coil and the magnetic field produced by the permanent magnets.

An assembly comprising an electromagnetic actuator and an air bearing slider attached to the coil of the electromagnetic actuator so that the position of the slider is determined by the position of the coil in the actuator, the electromagnetic actuator comprising a frame supporting permanent magnets and defining a pathway for movement of the actuator coil upon interaction of current through the coil and the magnetic field produced by the permanent magnets, is characterised according to the invention, by the actuator coil and the air bearing head slider being disposed alongside one another so that they are not separated from one another along the path of movement of the actuator coil/slider assembly, by the frame and the permanent magnets defining a slot within which a coil former for the coil is disposed, the frame being provided with orifices facing the side of the coil former and the coil former being provided with grooves aligned with the orifices in the frame, and by means being provided to force air out through the orifices to form air bearings for the coil former.

The invention will now be described by way of example, with reference to the accompanying drawings, in which:—

FIGURE 1 is a rear view, partly broken away, of a first magnetic head slider and actuator assembly embodying the invention;

FIGURE 2 is a side view of the assembly of FIGURE 1;

FIGURE 3 is a section on A—A in FIGURE 1;

FIGURE 4 is a section on B—B in FIGURE 2;

FIGURE 5 is an enlarged broken away rear view of the head slider and the electrical coil;

FIGURE 6 is a side view corresponding to FIGURE 5;

FIGURE 7 represents a disk drive assembly employing the assembly represented in the foregoing FIGURES;

FIGURE 8 is an oblique view of a second magnetic head slider and actuator assembly embodying the invention;

FIGURE 9 is a side view of a disk file, incorporating the assembly of FIGURE 8;

FIGURE 10 is an end section on line C—C taken through FIGURE 8; and

FIGURE 11 is a section on line D—D taken through FIGURE 10.

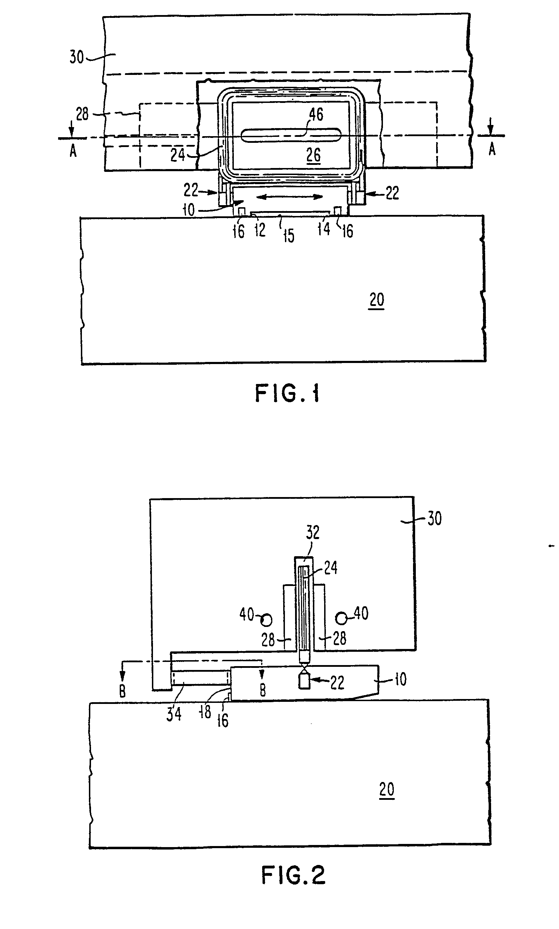

With reference to FIGURES 1 and 2, which depict a first embodiment of this invention, a magnetic head slider and actuator assembly comprises a head slider 10 having rails 12 and 14 and a recess 15 at an air bearing surface. This air bearing is of the type described in U.S. Patent Specification No. 3,855,625 and flies at a controlled low head/disk spacing without any external force being applied. Magnetic transducers 16 are mounted to the trailing end 18 of the slider 10 for transducing interaction with a magnetic disk 20.

A rectangular rigid wire coil 24 is supported on a core or former 26, that is thicker than the coil and which may be made of ceramic.

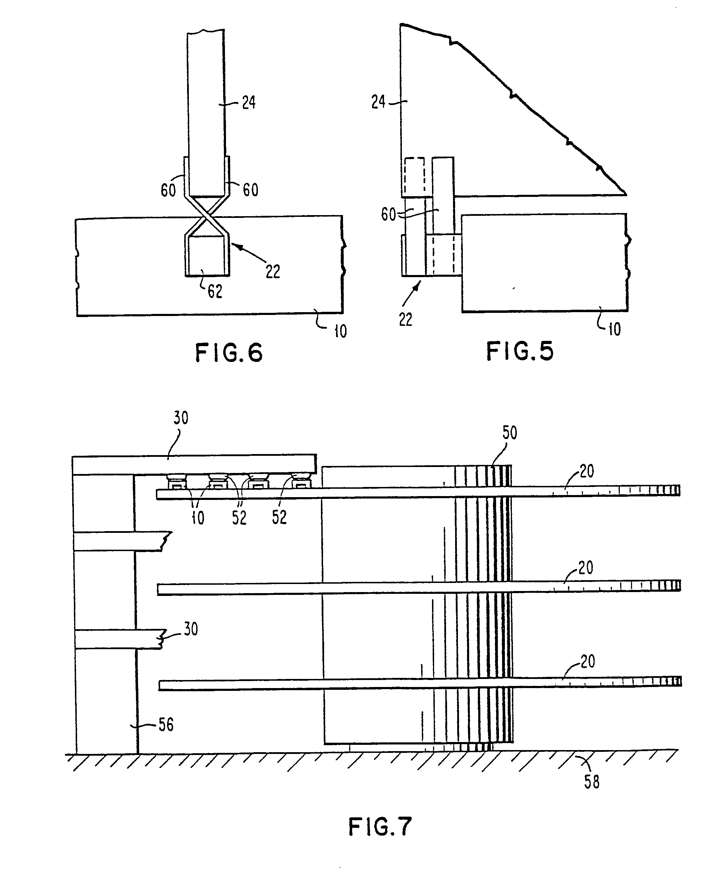

The wire coil 24 is embedded in epoxy for example, and is joined to the slider by a connecting cross spring pivot 22, illustrated in detail in FIGURES 5 and 6. The cross spring pivot 22 acts as a friction-free hinge that allows the coil to move free of the slider. Also, the slider moves free of the coil, so that the slider may follow the topography of the disk surface without restriction from the coil.

The coil 24 is oriented so that its rectangular plane extends perpendicularly from the slider surface and is aligned radially in the direction of accessing, as indicated by the bidirectional arrow in FIGURE 1. The wire coil 24 is connected to a current source (not shown) that provides bidirectional current of different magnitudes so that the coil and the slider may be actuated to move in a defined direction for a given distance to a selected data track on the disk surface.

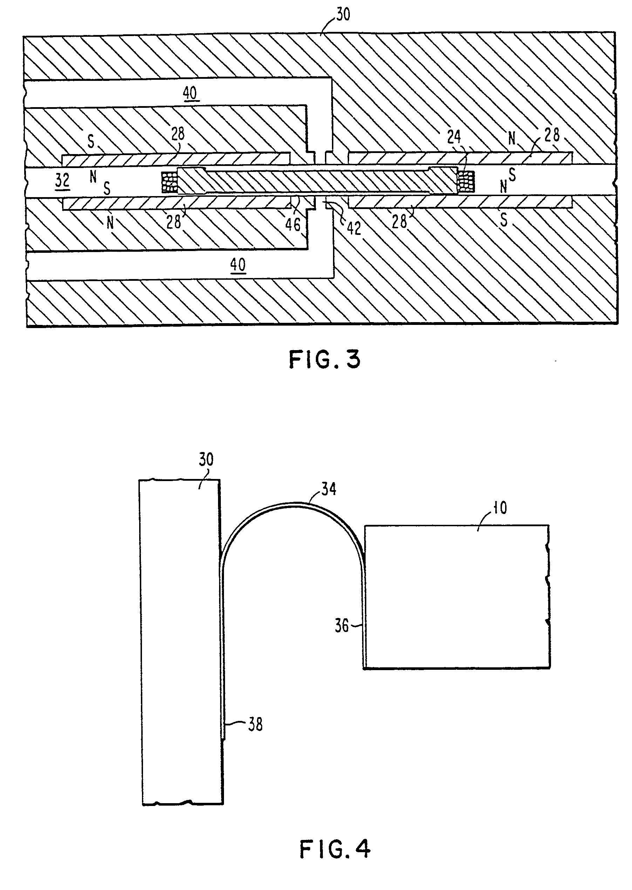

To achieve the actuation, magnetic flux is provided by sets of permanent magnets 28 (FIGURE 3) that are positioned in a stationary frame 30 fixed to a housing. One set of permanent magnets 28 is disposed to co-operate with one end of the coil. The other set of permanent magnets, which is reversed in polarity relative to the first set of permanent magnets, is disposed to co-operate with the other end of the coil. The polarity reversal is required because the current at the opposing coil ends flows in opposite directions.

Together with the permanent magnets, a linear actuator is formed for driving the slider, which is joined to the coil, bidirectionally in a radial accessing path across the surface of the disk. The rectangular planar type coil fits into a slot 32 within the rigid frame so that the coil is freely movable. The coil is limited in its travel to one half of the coil length, so as to maintain interaction with the correct polarities of the magnets. Stops may be provided to prevent escape of the coil from the slot.

Air passages 40 are provided within the frame to allow air, under pressure, to reach orifices 42 in the walls of the slot 32. The air bearing pressure is obtained from a blower (not shown) attached to the housing in which the frame is positioned. The core 26 has grooves 46 in each face aligned with the orifices 42. The grooves 46 distribute the air from the orifices uniformly over the bearing faces of the coil core independent of the radial position of the slider and coil assembly. The air sustains an air bearing between the walls of the slot and the flat surfaces of the coil core 26.

With reference to FIGURE 4, which is a section on B—B of FIGURE 2, a flexible lead wire cable 34 is fastened at one end 36 to the slider 10 and at its other end 38 to the stationary frame. The lead wires connect to the actuator coil 24 and to the coils of the magnetic heads or transducers 16 disposed on the air bearing slider 10. The flexibility of the wire cable allows the unfastened portion to roll along the surfaces of the frame and slider, as the slider is moved with the coil actuator.

FIGURES 5 and 6 illustrate the detail of the cross spring pivot connection 22 between the slider 10 and actuator coil structure 24. The pivot connection 22 is formed with two cross spring strips 60 that are attached to an extension 62 of the slider. When the coil 24 moves to access and then follow the disk tracks, the spring strips 60 serve as a mechanical hinge so that the slider motion across the disk precisely follows the coil movement, but is not unduly affected by the disk flutter or uneven topography of the disk.

FIGURE 7 represents a disk drive assembly that employs the slider and actuator assembly of FIGURES 1 to 6. A plurality of magnetic disks 20 are mounted to a spindle hub 50 for rotation relative to accessing sliders 10 coupled to respective coil actuators 52 which are disposed within slots of a fixed frame 30. The frame is attached to a pedestal 56 that is securely seated on a baseplate 58. The slider and actuator assemblies are movable bidirectionally relative to the disk surfaces for recording and accessing data on different data tracks. The actuators and sliders may be energised separately or as a group depending on the electrical connections to drive current sources. Only one group of slider and actuator assemblies and associated frame are shown for the purpose of convenience, but it should be understood that additional assemblies and frames may be employed with this disk drive configuration.

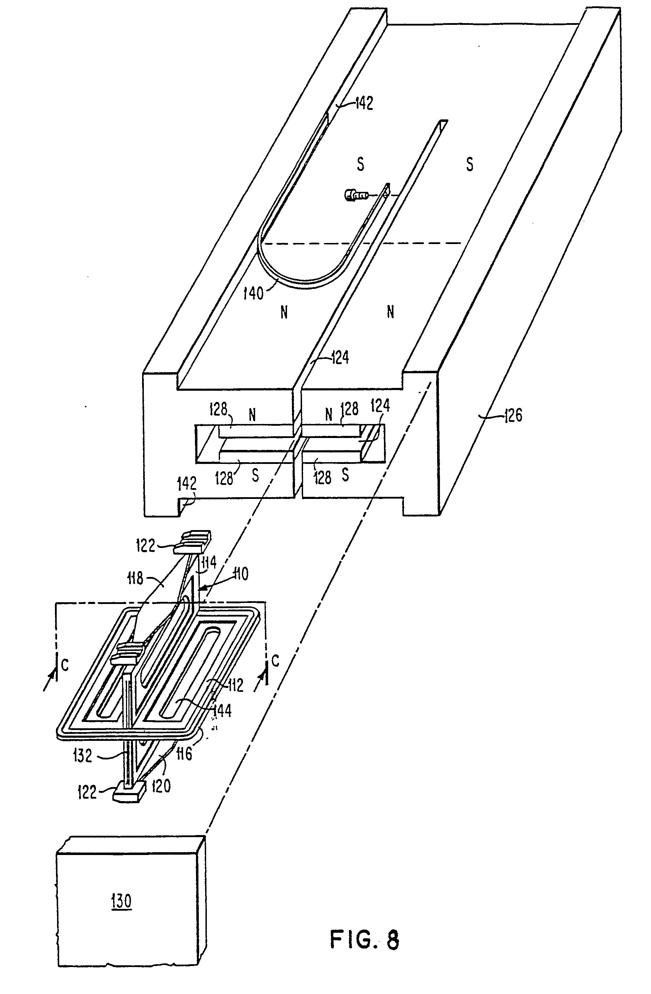

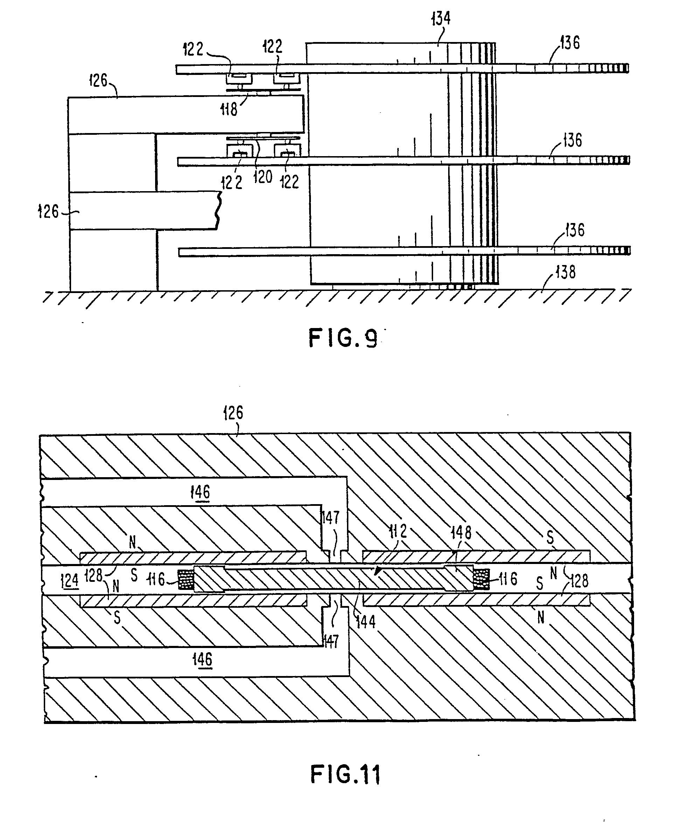

With reference to FIGURE 8, another magnetic head slider and actuator assembly comprises an X-shaped support shuttle 110 formed by intersecting planar parts 112 and 114, which may be made of ceramic, for example. The horizontal part 112 supports a rectangular coil 116 wound around its periphery, whereas the vertical part 114 supports spring suspensions 118 and 120 which are attached at opposite edges of the part 114. Head sliders 122 are disposed at the ends of the spring suspensions for transducing interaction with rotating magnetic disks 136, as illustrated in FIGURE 9.

The shuttle 110 is movable within an X-shaped slotted portion 124 of a stationary frame 126, which is made preferably of soft iron for easy passage of magnetic flux. The frame 126 houses eight permanent magnets 128 that are positioned to interact with the coil 116, which receives current from a current source (not shown) for actuating the coil and shuttle in a well known manner. The shuttle 110 is movable within a defined distance, such as 40 mm for example, at the central portion of the frame 126. The dashed line represents the centre line that bisects the slotted portion 124 of the frame at right angles to the direction of travel of the shuttle along the slot 124. The longitudinal slot 124 ends at a point in the frame so as to act as a stop, which effectively defines the limit of travel of the shuttle 110 in one direction. A stop plate 130 is fastened to the end of the frame to prevent the escape of the shuttle from the frame.

The magnets 128 are so arranged that the polarities of the magnetic flux encompassing the coil 116 will properly interact with the flow of current in the coil, i.e., the current throughout the coil will flow totally clockwise or counterclockwise at any given instant. Current signals to the coil are passed through coil leads 132 that are connected to a flexible wire cable 140, one end of which is fastened to the shuttle 110 and the other end of which is fastened to an inner wall 142 of the frame 126, by epoxy for example. The coil leads are bonded to an edge of the vertical ceramic part 114.

The wire cable 140 also provides leads to conduct current to and from the coils of the magnetic heads.

With reference to FIGURE 9, a disk file configuration employing the head slider and actuator assembly of FIGURE 8 includes a spindle 134 on which a plurality of magnetic disks 36 are mounted for rotation. Between each pair of disks, frame structures 126 are positioned, each frame supporting permanent magnets 128. Suspensions 118 and 120 and sliders 122 are movable relative to the fixed frames and rotary disks for accessing data tracks on the disk surfaces, in a well-known manner. The frame structures are fastened to a baseplate 138 to which the disk drive assembly is mounted.

As illustrated in FIGURE 8, the ceramic parts 112 and 114 are formed with shallow recesses 144. These recesses plus the flat areas surrounding them, provide an air bearing effect.

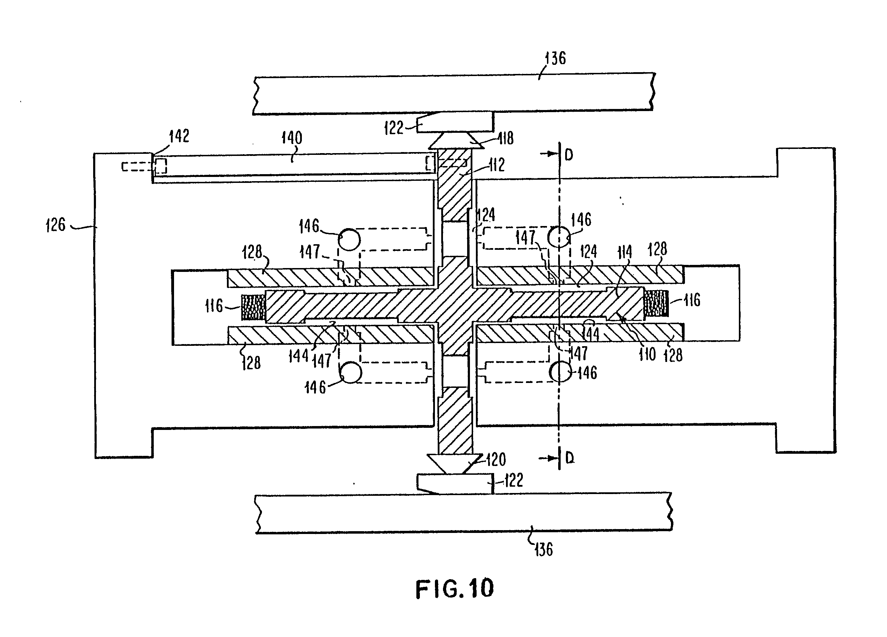

With reference to FIGURES 10 and 11, air is supplied through air passages 146 to parts 112 and 114. At the end of each air passage adjacent to the parts 112 and 114 is a restrictor aperture 147 that controls the flow of air into the recesses 144. This ensures that air will be supplied to the recesses 144 for all positions of the shuttle 110.

The weight of the shuttle actuator assembly 110 is relatively small so that it can be supported on frictionless air bearings 148. The air bearings 148 are of the externally pressurised type that require a low pressure which is supplied by a blower (not shown), which may be directly attached to the spindle 134. The X-shaped shuttle 110 floats on the air bearings and does not touch the frame during its accessing movement.

In a preferred implementation, each head slider is connected to separate lead wires fixed to each of the four edges of the vertical part 114, and each lead wire set is separately connected to its own flexible wire cable 140 disposed on respective walls 142 of the frame 126.

## Claims

1. An assembly comprising an electromagnetic actuator and an air bearing slider (10; 122) attached to the coil (24; 116) of the electromagnetic actuator so that the position of the slider is determined by the position of the coil in the actuator, the electromagnetic actuator comprising a frame (30; 126) supporting permanent magnets (28; 128) and defining a pathway for movement of the actuator coil upon interaction of current through the coil and the magnetic field produced by the permanent magnets, the assembly being characterised by the actuator coil and the air bearing head slider being disposed alongside one another so that they are not separated from one another along the path of movement of the actuator coil/slider assembly, by the frame and the permanent magnets defining a slot (32; 124) within which a coil former (26; 112) for the coil is disposed, the frame being provided with orifices (42; 147) facing the side of the coil former and the coil former being provided with grooves (46; 144) aligned with the orifices (42; 147) in the frame, and by means (40; 146) being provided to force air out through the orifices to form air bearings for the coil former.

2. An assembly as claimed in claim 1, in which the actuator coil is attached to the side of the slider opposite to its air bearing surface and lies in a plane substantially perpendicular to the air bearing surface.

3. An assembly as claimed in claim 2, in which the coil former (26) is rectangular.

4. An assembly as claimed in claim 3, in which the coil former is made of ceramic.

5. An assembly as claimed in any of claims 2 to 4, in which the actuator coil is attached to the slider by means of a cross spring pivot (22).

6. An assembly as claimed in claim 1, in which the coil former is an X-shaped support shuttle (110) comprising a pair of intersecting planar parts (112, 114).

7. An assembly as claimed in claim 6, in which the actuator coil (116) is formed around the periphery of said one planar part (112).

8. An assembly as claimed in 6 or claim 7, in which the air bearing sliders (122) are supported on the edges of the other planar part via spring suspensions (118, 120).

9. An assembly as claimed in any of claims 6 to 8, in which the frame and the permanent magnets define an X-shaped slot (124) within which the support shuttle (110) is disposed, the frame is provided with orifices (147) facing the planar parts of the X-shaped support shuttle, and means are provided to force air out through the orifices and recesses (144) are formed in the planar parts of the X-shaped support shuttle to provide air bearings for it.

10. An assembly as claimed in any preceding claim, including a flexible electrical cable (34; 140) connected to the slider/actuator coil assembly and attached to the frame.

11. A magnetic disk file including a pedestal (56; 156) having an axis parallel to that of the disk file hub and supporting the frame of an assembly as claimed in any preceding claim so that the slider can slide radially of a magnetic disk.

## Patentansprüche

1. Aufbau mit einem elektromagnetischen Steller und einem an der Spule (24; 116) des elektromagnetischen Stellers so angebrachten Luftlagergleitstück (10; 122), daß die Stellung des Gleitstücks durch die Stellung der Spule im Steller bestimmt wird, wobei der elektromagnetische Steller einem Rahmen (30; 126) aufweist, welcher Permanentmagnete (28; 128) trägt und eine Bewegungsbahn für die Stellerspule bei Wechselwirkung des Spulenstromes mit dem von den Permanentmagneten erzeugten Magnetfeld bestimmt, wobei der Aufbau dadurch gekennzeichnet ist, daß die Stellerspule und das Luftlagerkopfgleitstück nebeneinander angeordnet sind, so daß sie längs der Bewegungsbahn des Stellerspule/Gleitstück-Aufbaus nicht voneinander getrennt werden, daß der Rahmen und die Permanentmagneten einen Schlitz (32; 124) bestimmen, in welchem ein Spulenkern (26; 112) für die Spule angeordnet ist, wobei der Rahmen Öffnungen (42; 147) aufweist, die der Seite des Spulenkerns zugekehrt sind, und der Spulenkern mit auf die Öffnungen (42; 147) im Rahmen ausgerichteten Nuten (46; 144) versehen ist, und daß Mittel (40, 146) zum Herausdrücken von Luft durch die Öffnungen zur Bildung von Luftlagern für den Spulenkern vorgesehen sind.

2. Aufbau nach Anspruch 1, bei welchem die Stellerspule an der seiner Luftlagerfläche gegenüberliegenden Seite des Gleitstücks angebracht ist und in einer zur Luftlagerfläche im wesentlichen senkrechten Ebene liegt.

3. Aufbau nach Anspruch 2, bei welchem der Spulenkern (26) rechteckig ist.

4. Aufbau nach Anspruch 3, bei welchem der Spulenkern aus Keramik besteht.

5. Aufbau nach irgendeinem der Ansprüche 2 bis 4, bei welchem die Stellerspule am Gleitstück mittels eines Kreuzfedergelenks (22) angebracht ist.

6. Aufbau nach Anspruch 1, bei welchem der Spulenkern ein X-förmiges Trägerschiffchen (110) ist, welches ein Paar einander schneidender ebener Teile (112, 114) aufweist.

7. Aufbau nach Anspruch 6, bei welchem die Stellerspule (116) längs des Randes eines der ebenen Teile (112) ausgebildet ist.

8. Aufbau nach Anspruch 6 oder Anspruch 7, bei welchem die Luftlagergleitstücke (122) am Rand des anderen ebenen Teils über eine Federaufhängung (118, 120) gehalten werden.

9. Aufbau nach irgendeinem der Ansprüche 6 bis 8, bei welchem der Rahmen und die Permanentmagneten einen X-förmigen Schlitz (124) bestimmen, in welchem das Trägerschiffchen (110) angeordnet ist, wobei der Rahmen mit den ebenen Teilen des X-förmigen Trägerschiffchens zugeordneten Öffnungen (147) versehen ist, und Mittel zum Auspressen von Luft durch die Öffnungen vorgesehen sind und Ausnehmungen (144) in den ebenen Teilchen des X-förmigen Trägerschiffchens ausgebildet sind, um so Luftlager für dasselbe zu schaffen.

10. Aufbau nach irgendeinem vorstehenden Anspruch, welcher ein biegsames elektrisches Kabel (34; 140) enthält, welches mit dem Gleitstück/Stellerspule-Aufbau verbunden und am Rahmen angebracht ist.

11. Magnetplattendatei mit einem Ständer (56; 156), welcher eine zur Plattendateinabe parallele Achse hat und den Rahmen eines Aufbaus gemäß einem der vorstehenden Ansprüche so trägt, daß das Gleitstück in Radialrichtung einer Magnetplatte gleiten kann.

**Revendications**

1. Un ensemble comprenant un dispositif d'actionnement électromagnétique et un patin à coussin d'air fixé sur la bobine du dispositif d'actionnement électromagnétique de manière que la position du patin soit déterminée par la position de la bobine dans le dispositif d'actionnement, le dispositif d'actionnement électromagnétique comprenant un châssis supportant des aimants permanents et définissant une voie de déplacement de la bobine du dispositif d'actionnement lors d'une interaction du courant passant dans la bobine et du champ magnétique produit par les aimants permanents, caractérisé en ce que la bobine du dispositif d'actionnement et le patin à coussin d'air de support de tête sont disposés l'un à côté de l'autre de manière qu'ils ne soient pas séparés l'un de l'autre le long du trajet de déplacement de l'ensemble bobine de dispositif d'actionnement/patin, en ce que le châssis et les aimants permanents définissent une fente dans laquelle est disposé un noyau de la bobine, le châssis étant pourvu d'orifices dirigés du côté du noyau de bobine et le noyau de bobine étant pourvu de rainures alignées avec les orifices ménagés dans le châssis, en ce qu'il est prévu des moyens pour faire passer de l'air les orifices pour former des paliers à coussin d'air pour le noyau de bobine.

2. Un ensemble comme revendiqué dans la revendication 1, dans lequel la bobine du dispositif d'actionnement est fixée sur le côté du patin opposé à sa surface de palier à coussin d'air et est située dans un plan sensiblement perpendiculaire à la surface de palier à coussin d'air.

3. Un ensemble comme revendiqué dans la revendication 2, dans lequel le noyau de bobine (26) est rectangulaire.

4. Un ensemble comme revendiqué dans la revendication 3, dans lequel le noyau de bobine est formé de déramique.

5. Un ensemble comme revendiqué dans une quelconque des revendications 2 à 4, dans lequel la bobine du dispositif d'actionnement est fixée sur le patin au moyen d'un pivot à ressorts croisés (22).

6. Un ensemble comme revendiqué dans la revendication 1, dans lequel le noyau de bobine est une navette porteuse (110) en forme de X comprenant deux parties planes se coupant (112, 114).

7. Un ensemble comme revendiqué dans la revendication 6, dans lequel la bobine de dispositif d'actionnement (116) est formée autour de la périphérie d'une desdites parties planes (112).

8. Un ensemble comme revendiqué dans la revendication 6 ou la revendication 7, dans lequel les patins à coussins d'air (122) sont supportés sur le bord de l'autre partie plane par l'intermédiaire d'une suspension élastique (118, 120).

9. Un ensemble comme revendiqué dans une quelconque des revendications 6 à 8, dans lequel le châssis et les aimants permanents définissent une fente (124) en forme de X à l'intérieur de laquelle la navette porteuse (110) est disposée, le châssis est pourvu d'orifices (147) dirigés vers les parties planes de la navette porteuse en forme de X, et des moyens sont prévus pour faire sortir de l'air par les orifices et des évidements (144) sont formés dans les parties planes de la navette porteuse en forme de X pour constituer pour elle des paliers à coussins d'air.

10. Un ensemble comme revendiqué dans une quelconque des revendications précédentes, comprenant un câble électrique flexible (34; 140) relié à l'ensemble patin/bobine de dispositif d'actionnement et fixé sur le cadre.

11. Fichier à disques magnétiques comprenant un socle (56; 156) dont l'axe est parallèle à celui de la broche du fichier à disques et supportant le châssis d'un ensemble comme revendiqué dans une quelconque des revendications précédentes de manière que le patin puisse glisser radialement par rapport à un disque magnétique.

FIG. 1

FIG.2

FIG. 3

FIG. 4

2

FIG.6

FIG.5

FIG.7

FIG. 8

4

FIG.9

FIG.11

FIG.10